(19)

Europäisches Patentamt

European Patent Office

Office européen des brevets

(11) EP 3 404 845 A1

(12) EUROPEAN PATENT APPLICATION

(43) Date of publication:
21.11.2018 Bulletin 2018/47

(51) Int Cl.:
H04B 7/06 (2006.01)     H04W 16/28 (2009.01)

(21) Application number: 18172939.3

(22) Date of filing: 17.05.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 17.05.2017 EP 17171556

(71) Applicant: IPCom GmbH & Co. KG
82049 Pullach (DE)

(72) Inventors:
• SCHMIDT, Andreas
38124 Braunschweig (DE)
• BIENAS, Maik
38170 Schöppenstedt (DE)

(74) Representative: Tomlinson, Edward James
Frohwitter
Patent- und Rechtsanwälte
Possartstrasse 20
81679 München (DE)

(54) **BEAM STEERING OPTIMIZATION**

(57) The present invention provides a method of determining, at a receiver, information for optimizing a transmission direction of a radio beam towards the receiver, the method comprising receiving a plurality of information carrying assistance radio beams, the plurality of assistance beams being arranged in a geometrical pattern relative to a main beam; measuring for each received assistance radio beam a received power level; and using the geometrical pattern and the received power levels to generate a transmit direction offset for the main radio beam to direct the main radio beam to the receiver relative to an initial position determined by the geometrical pattern, wherein the geometrical pattern varies with time in a predetermined manner.

Fig. 10

**Description**

The present invention relates to beam steering in a mobile communications system.

With the evolution of cellular technology from existing 3.9G and 4G systems (such as 3GPP's LTE and LTE-Advanced radio access technologies) to 5G, higher frequencies come into play. For example, the next generation radio access technology to be specified by 3GPP as a submission into the IMT 2020 process triggered by ITU-R is expected to operate in "legacy" frequency bands of up to 6 GHz and in some new frequency bands well beyond this point. This LTE/LTE-Advanced successor technology is also referred to as NR (New Radio) in 3GPP.

Base stations for future communication systems designed to operate in higher frequency bands may use wireless technology based on mm waves (e.g., in frequency bands ranging from 20 to 300 GHz) to communicate with mobile devices. In order to achieve greater reach using a given power budget or to make use of the good spatial re-use properties that radio links operated on higher frequencies offer, base stations (and mobile devices) may utilize directional transmission and reception techniques to communicate.

This invention deals with the detection of reference signals impressed on beam-formed signals particularly in a high frequency radio environment, such as the upcoming 5G radio access technologies currently specified by 3GPP (also known as "NR").

As opposed to omnidirectional antennas, directional antennas allow concentration of radio signals towards a certain spot or area. Concentration of radio waves into a certain direction can be achieved for instance with antenna arrays (also known as "phased arrays"). Usually, concentrated transmissions come along with a reduction of the respective radio beam's width. An antenna array is an antenna system that encompasses a certain number of distinct antenna elements. The geometrical arrangement of these single antenna elements may vary significantly and determines the beam forming characteristics as follows: arranging multiple antenna elements in a row (e.g., in a 1x8 formation) would allow for two-dimensional beam forming within a (pre-defined) dissemination plane. An arrangement in matrix format (e.g., in an 8x8 formation) would allow for three-dimensional beam forming in a (pre-defined) dissemination space.

The relative phases of the respective signals feeding the distinct antenna elements forming an antenna array are set in such a way that an effective radiation pattern of the entire array is reinforced in a desired direction and - at the same time - suppressed in undesired directions. The phase relationship among the single antenna elements may be fixed or it may be adjustable (as for beam steering). A directed antenna beam usually consists of a strong main lobe pointing in the desired direction of signal reinforcement and at least one side lobe with much less intensity.

While the directional transmission and reception techniques may provide a given base station with greater reach, a trade-off may be that at any point in time, they may provide coverage to only part of that base station's coverage area. Highly directed beams may be suited to serve and track distinct mobile devices, but they have some limitations when a comprehensive (i.e. cell-wide) coverage is required (e.g., for idle mode user equipment, UEs, seeking a connection to the base station).

A solution to this problem is to provide two sets of beams. One or more common beams form a set of transmission and reception point, TRP, specific beams which are formed for beam sweeping. In the context of the present invention the term "beam sweeping" describes a steady beam movement (or cyclic movement pattern) to service the entire coverage area of a TRP. The set of beams provides cell coverage and offer "cell entry functions" (synchronization, cell ID, system info, random access, etc.). The set of beams is subject to radio resource management measurement for cell-level mobility.

A further set of dedicated beams form UE-specific beams. The beams are formed for dynamic scheduling, are used for unicast data transmission, are invisible to RRC; and only require PHY measurements.

The initial access of a UE to a cell takes place on the first type of beams (so-called "common beams" or "sweeping beams"). Exchange of data takes place on the second type of beams or "dedicated beams" when a radio resource control, RRC, connection is already established and beam tracking operations are desirable. For the present invention these dedicated beams are of particular relevance.

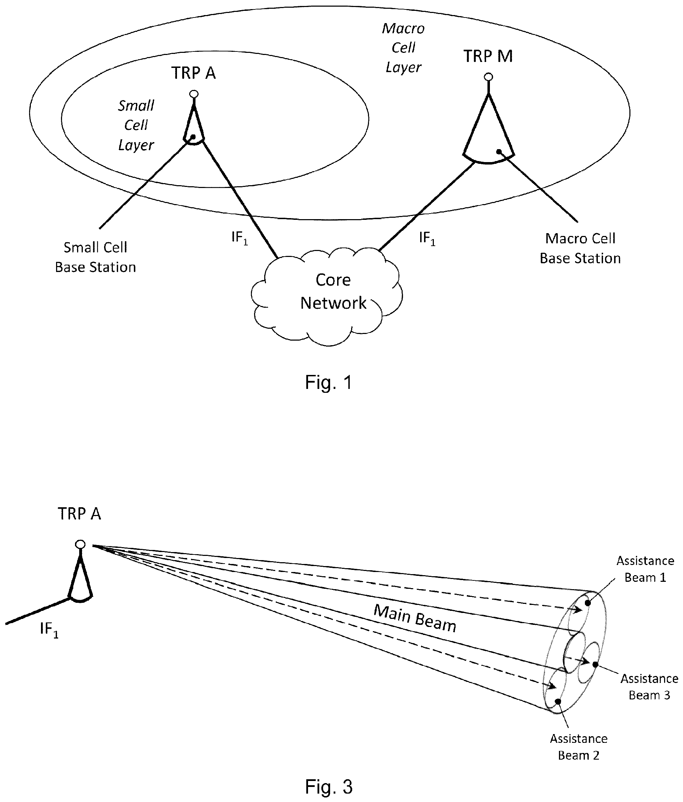

In order to provide optimum network coverage many deployment scenarios in cellular communication networks combine a first, macro cell layer (base stations operating on a first, often lower, frequency layer covering a big service area) and a second, small cell layer to increase data throughput (base stations operating as "booster cells" on a second, often higher, frequency layer deployed to service certain hot spots). The example network architecture in Fig. 1 shows a macro cell base station TRP M operating on the macro cell layer and a small cell base station TRP A operating as a booster cell on the small cell layer. Base station TRP A may be realized as a remote radio head (RRH). Such a mixed network deployment is referred to as a heterogeneous network (HetNet). Some types of mobile devices can connect to both types of frequency layers simultaneously for example in the context of carrier aggregation (CA) or dual connectivity (DC).

With the introduction of much higher frequencies (e.g., in the mm wave range) and beamforming techniques, the characteristics of the small cell layer will change compared to current deployment scenarios. We can anticipate that the (ideally) comprehensive macro cell coverage on lower frequencies is complemented by a multitude of small cell base stations or remote radio heads (RRH) offering additional directive links, i.e. the small cell base stations provide a predominantly oriented and patchy coverage on higher frequencies making use of beam forming techniques (rather than a comprehensive small cell layer).

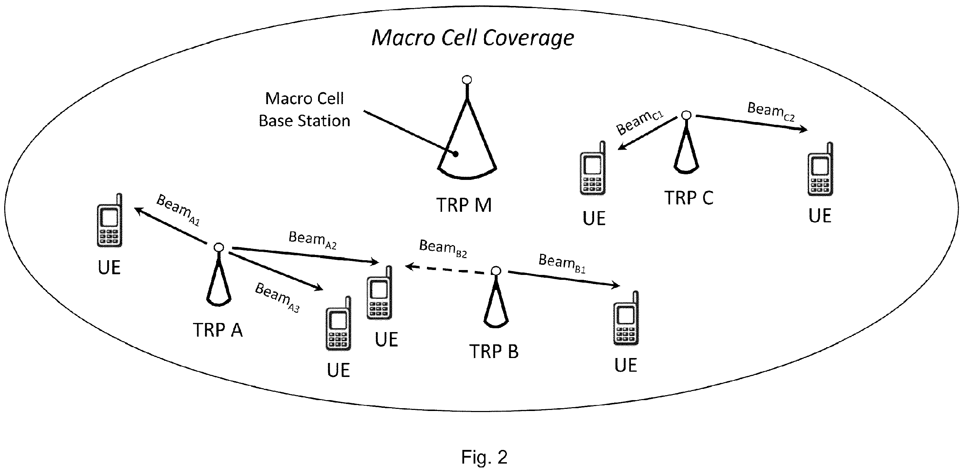

An example deployment scenario for 5G with one macro cell base station (TRP M) and three small cell base stations (TRPs A through C) is shown in Fig. 2. For reasons of simplicity Fig. 2 only shows the main lobes of dedicated beams transmitted from the TRPs to the handsets in downlink direction. Beam B2 (dashed arrow) indicates that one UE can be served by more than one TRP at the same time, if the UE in question is capable of handling multiple oriented connections. In addition to the various dedicated beams shown in Fig. 2 on the higher frequency layer the various UEs may be concurrently connected to TRP M which is offering a comprehensive macro cell coverage. The macro cell layer may provide the c-plane to the various UEs.

In the present description of the invention, the following terminology is used:

Transmission and Reception Point (TRP): An antenna system (e.g., a phased antenna array) comprising a number of distinct antenna elements to form oriented transmission and reception characteristics on the infrastructure side. A TRP may be co-located with the base station or deployed in a stand-alone manner (i.e. as a RRH) and coupled with the base station, for instance via fibre optics.

TRP-Tx-Beam: An oriented downlink transmission configuration at the TRP used to transmit signals from tower to handset with improved antenna gain.

TRP-Rx-beam: An oriented uplink reception configuration at the TRP used to receive signals transmitted from handset to tower with improved antenna gain.

UE-Tx-beam: An oriented uplink transmission configuration at the UE used to transmit signals from handset to tower with improved antenna gain.

UE-Rx-beam: An oriented downlink reception configuration at the UE used to receive signals transmitted from tower to handset with improved antenna gain.

Directed Downlink: A downlink connection made up of a TRP-Tx-beam and UE-RX-beam.

Directed Uplink: An uplink connection made up of a UE-TX-beam and a TRP-RX-beam.

Data: As opposed to symbols directly impressed on the physical layer, such as reference signals, the term "data" refers to user data (LTE terminology: u-plane data) and/or control data (LTE terminology: c-plane data) transported by means of the respective protocol stack.

A paper entitled "Overview of FD-MIMO in LTE-Advanced Pro" by Hyoungju Ji et al. IEEE Communications Magazine 55(2), Feb. 2017, discusses some improvement in the reference signals, RS, scheme for MIMO systems and proposes to use beam-formed channel state information-RS, CSI-RS, transmissions in order to acquire a spatial angle between an eNB and UE as follows. The eNB is configured to transmit multiple beam-formed CSI-RSs in multiple downlink directions. The UE selects the best among all possible beams and reports the best beam's received power (together with a beam identifier) back to the eNB. Additionally, the UE may also report the beam identifiers and received power levels of further (e.g., neighbouring) beams back to the eNB. In this concept neighbouring radio beams are treated like neighbour cells and the measurements performed by the UE are similar to neighbour cell measurements.

Different RS may be impressed on different downlink beams in a cell for a UE to report the best beam found. However, this method does not guarantee that a UE is provisioned with the best (i.e. strongest) TRP-Tx-Beam possible. The UE can only pick one of the offered beams and request the corresponding TRP to configure the selected beam with appropriate data. In case none of the CSI-RS-beams is pointing to the UE's current position, the optimum TRP-TX-Beam cannot be configured.

The present invention provides a method of determining, at a receiver, information for optimizing a transmission direction of a radio beam towards the receiver, the method comprising receiving a plurality of information carrying assistance radio beams, the plurality of assistance beams being arranged in a geometrical pattern relative to a main beam; measuring for each received assistance radio beam a received power level; and using the geometrical pattern and the received power levels to generate a transmit direction offset for the main radio beam to direct the main radio beam to the receiver relative to an initial position determined by the geometrical pattern, and wherein the geometrical pattern varies with time in a predetermined manner.

The terms "assistance beam(s)" and "assistance radio beam(s)" mean the same thing and are used interchangeably throughout this document.

In another aspect, the invention provides a method of transmitting a radio beam towards a receiver, the method comprising transmitting from a transmitter a plurality of information carrying assistance radio beams, the plurality of assistance beams being arranged in a geometrical pattern relative to a main beam; and receiving information for performing a transmit direction offset determination for the main beam to direct the main beam to the receiver relative to an initial position determined by the geometrical pattern, wherein the geometrical pattern varies with time in a predetermined manner.

The invention provides in one aspect for an adjustment of a TRP-Tx-Beam comprising three stages.

A set of assisting beams with reference signals (RS) is transmitted in downlink direction adjacent to the main beam on which the actual user data is transported. The reception power of each of these assisting beams can be measured individually by the UE, e.g. because narrow beams have good spatial re-use properties, different (orthogonal) reference signals (RS), different time instances, or different (sub-)carrier frequencies are used for transmission. Furthermore, the geometrical arrangement of these beams (i.e. their transmission angle offset towards each other as well as to the main beam) is known in advance (pre-defined). A minimum number of three assisting beams is envisaged for the preferred embodiment.

From this geometrical pattern of beams the UE is able to determine/calculate the spot where the best signal can be picked up (as opposed to simply reporting an identifier of the strongest beam). This can for instance be achieved by means of a calculation method. The theoretically best beam doesn't necessarily fall together with any of the actually received beams.

Finally, the UE sends feedback information in an uplink direction to the TRP. This feedback information may contain the calculated transmission angle offset of the best signal strength, relative to the assistance beams and/or the main beam. Based on this feedback, that may also be devised as a kind of beam steering command, the TRP can adjust the main beam (plus the set of assisting beams). Alternatively, in another variant of the invention, the UE can transmit the measured power levels of the beam-formed reference signals to the TRP, where the optimum parameters for (re-)adjusting the antenna array to target the UE's current position are calculated. Optionally, the TRP may alter (at least one of) the RS impressed on the assisting beams after a predefined number of (e.g., after each) adjustment iteration(s).

Unlike systems where a UE informs the base station about a newly selected beam, in the present invention, the base station can be informed about (or is enabled to calculate) the position of the main beam for most reliable reception of the directed main lobe signal. The respective TRP may then adjust the downlink transmission orientation accordingly thereby improving its downlink antenna gain. Eventually, transmission power may be reduced at the TRP and energy can be saved. Further, the time-frequency resource can be re-used in other parts of the TRP's coverage area and therefore the system capacity is increased.

Preferred embodiments of the invention will now be described, by way of example only, with reference to the accompanying drawings in which:

Fig. 1 is a schematic representation of a prior art heterogeneous network;
Fig. 2 is a schematic representation of a prior art communications system incorporating two types of coverage layers;
Fig. 3 is a schematic representation of a TRP transmitting a main beam and three assistance beams;
Fig. 4 is a cross section of the beam pattern of Fig. 3;
Fig. 5 shows an alternative beam cross section;
Fig. 6 shows for the three assistance beams of Fig. 3 a measured power level and a determination of a vector for each assistance beam;
Fig. 7 illustrates how the vectors of Fig. 6 may be determined;
Fig. 8 illustrates further how the vectors of Fig. 6 may be determined;
Fig. 9 illustrates a resulting vector calculation for the situation of Fig. 6;
Fig. 10 illustrates an assistance beam pattern where the number of assistance beams changes with time in a predetermined manner;
Fig. 11 illustrates an assistance beam pattern where a geometrical pattern of assistance beams changes with time in a predetermined manner;
Fig. 12 illustrates a further assistance beam pattern where the geometrical pattern of assistance beams changes with time in a predetermined manner;
Fig. 13 shows an example of a changing 3x3 matrix of beams including the main beam; and
Fig. 14 shows an arrangement of two concentric rings of assistance beams alternating with time.

Referring to Fig. 3, there is shown a main beam (such as a TRP-Tx-beam utilized to transmit data to a particular UE) in a downlink direction together with three surrounding assistance beams each carrying a different set of RS. According to a first embodiment of our invention, the geometrical and/or timely pattern of the beam arrangement that is applied by a TRP is known on the receiving side. This is not required for a second embodiment, where the UE reports the received power levels and the network side (e.g., the TRP) calculates the parameters for an optimal TRP-Tx-beam configuration. The geometrical and/or timely pattern of the beam arrangement may be indicated to (a certain sub set of) the UEs in advance either via broadcast (e.g., as part of the system information), or multicast, or dedicated (e.g., as a new or modified dedicated RRC message or directly impressed on physical layer) signalling means, or it is pre-defined. Indication may comprise selecting values from a set of pre-defined fixed values.

A minimum number of three assisting beams in form of a equilateral triangle is envisaged as the preferred embodiment of this invention. However, in other embodiments there may be more than three assistance beams (four forming a square, five forming a pentagon, six forming a hexagon, and so on) and geometrical beam patterns may vary over time, respectively.

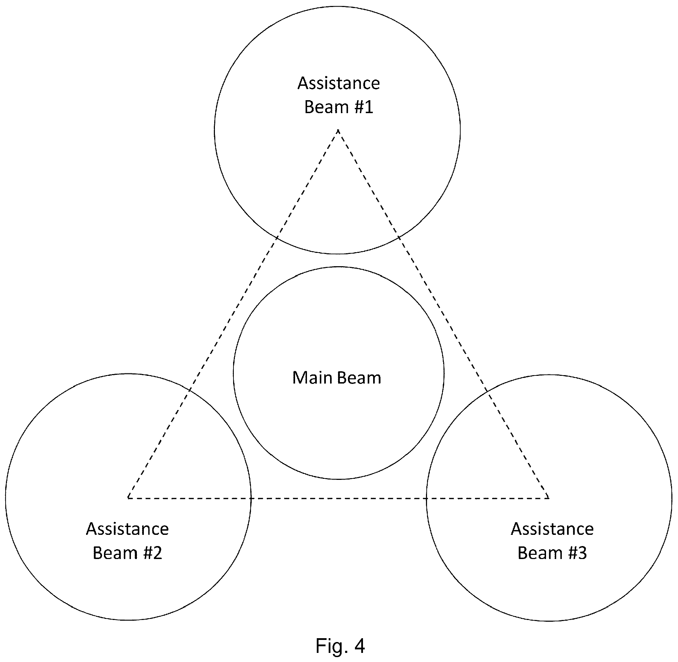

Fig. 4 shows a first geometrical beam pattern that consists of three assistance beams surrounding the main beam in the middle. The main beam carries at least data (e.g., c-plane and/or u-plane data) determined for the UE in question in a downlink direction and the assistance beams carry at least the reference signals either continuously or according to a pre-defined schedule.

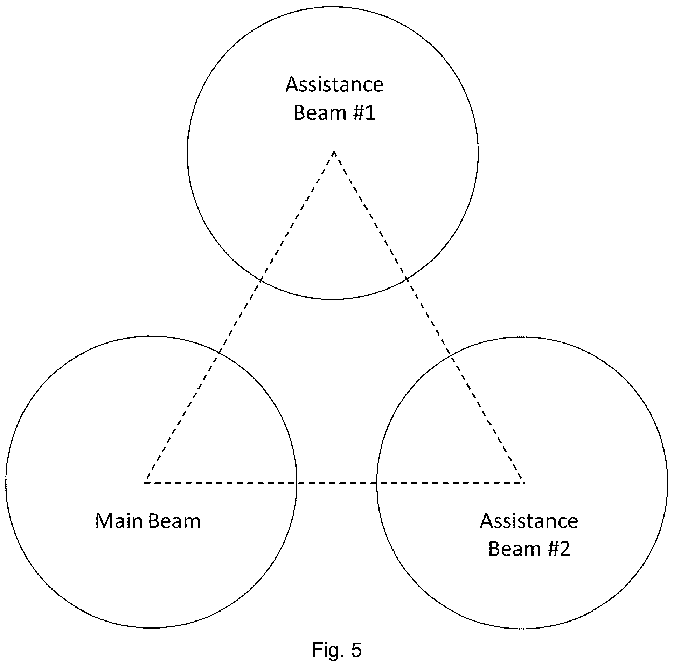

In another embodiment the third assistance beam is substituted by the main beam (carrying data determined for the UE in question in a downlink direction) and the assistance beams carry at least the reference signals as shown in Fig. 5, so that only two additional beams are required to support the method. For this special case, the set of reference signals for TRP-Tx-beam adjustment also needs to be impressed on the main beam (preferably in addition to already existing other reference signals on the very same beam).

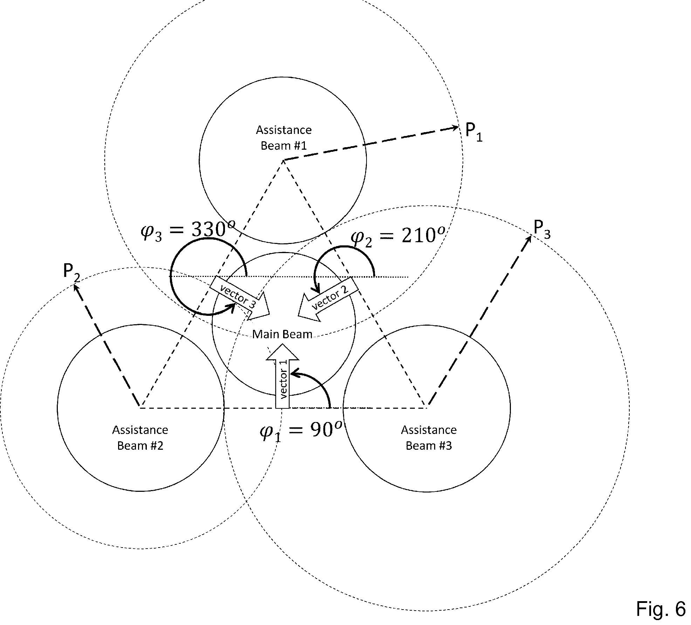

Fig. 6 is a more detailed view of the first embodiment according to Fig. 4. Here, the following assumption are made:

i) the UE's current UE-Rx-beam configuration is already optimally adjusted;

ii) The (normalized) received power levels Px calculated from the three assistance beams' reference signals are as follows:

$P_1$ = 8.0
$P_2$ = 6.3
$P_3$ = 9.0

This means that the downlink channel quality of assistance beam #2 (to the left of the main beam) is currently worse than the downlink channel quality of assistance beams #1 (above the main beam) and #3 (to the right of the main beam):

$$P_3 > P_1 > P_2$$

Three vectors, vectors 1 through 3 in Fig. 6 symbolize an "attraction" of each assistance beam. They are therefore pointing at the centre of the respective assistance beam. A strong assistance beam, such as assistance beam #3 hints at a good downlink channel quality for the main beam when the main beam is moved by TRP-Tx-beam control towards (the centre of) assistance beam #3. Each individual assistance beam's influence needs to be taken into account by the UE to determine the best spot for receiving the main beam with the best reception quality possible. In this context, each assistance beam's level of "attraction" can also be interpreted as said assistance beam's ratio in the resulting transmit angle offset.

For each of the assistance beams, an angle $\varphi$ is derived indicative of the position of the assistance beam with respect to a nominal position of the main beam. In Fig. 6, assistance beam #1 is above the main beam and therefore $\varphi_1$ = 90°, assistance beam #2 is below and to the left of the main beam with $\varphi_2$ = 210° and assistance beam #3 is to the right of and below the main beam with $\varphi_3$ = 330°.

According to the first embodiment of this invention the UE now calculates the "location" of the best reception quality according to the following equation (which is an additive superposition of vectors, with one vector per assistance beam):

$$\overrightarrow{v_{res}} = \overrightarrow{v_1} + \overrightarrow{v_2} + \overrightarrow{v_3}. \qquad \text{(Equation 1)}$$

From this vector a transmit angle offset can be derived.

The norm (i.e. length) of the various vectors is calculated as follows:

$$\left|\overrightarrow{v_x}\right| = \frac{P_x}{P_1 + P_2 + P_3} \qquad \text{(Equation 2)}$$

With this equation, assistance beams with good channel properties (such as assistance beam #3) are assigned strong "attraction" vectors and assistance beams with poor channel properties (such as assistance beam #2) are assigned weak "attraction" vectors.

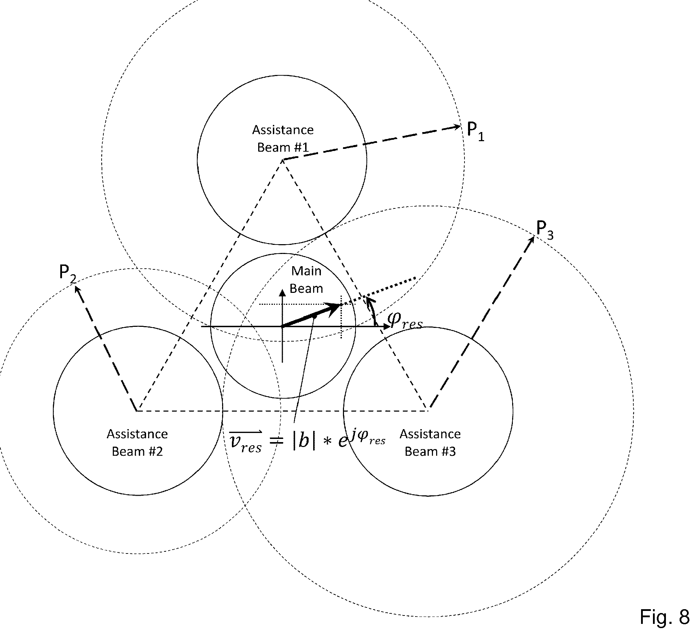

The result of the additive superpositioning of the three vectors $\overrightarrow{v_1}$ to $\overrightarrow{v_3}$ according to the first example beam arrangement is shown in Fig. 8. It is denoted $\overrightarrow{v_{res}}$ and pointing to the spot where the main lobe of the beam system would benefit from the best downlink channel reception quality (at the UE's current location). As already indicated above, the theoretically best beam doesn't necessarily fall together with any of the actually received beams.

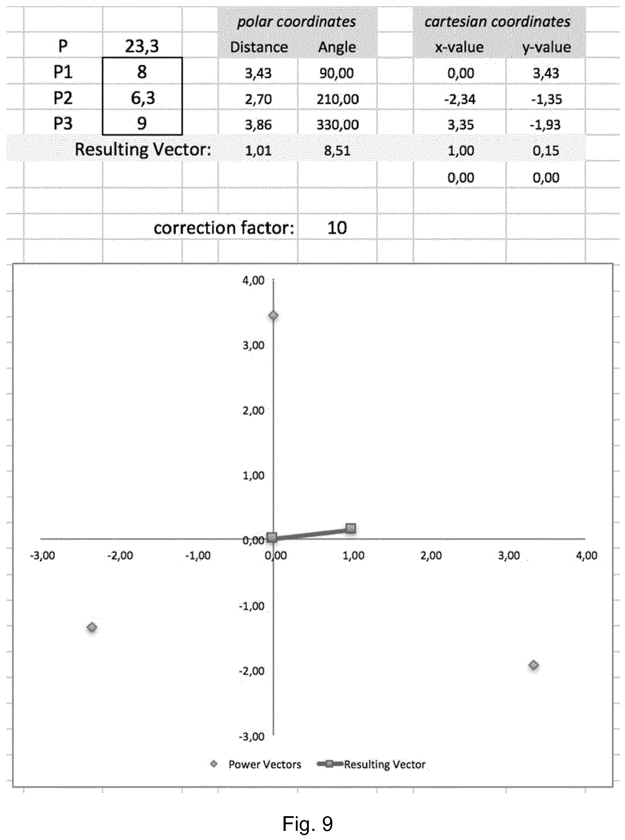

Fig. 9 shows the calculation details. First, the vectors $\overrightarrow{v_1}$ to $\overrightarrow{v_3}$ are converted from polar coordinates into Cartesian coordinates, then summed. The resulting vector is $\overrightarrow{v_{res}}$. For better readability the norm (i.e. length) of each input vector $\overrightarrow{v_1}$ to $\overrightarrow{v_3}$ was multiplied by a correction factor of 10.

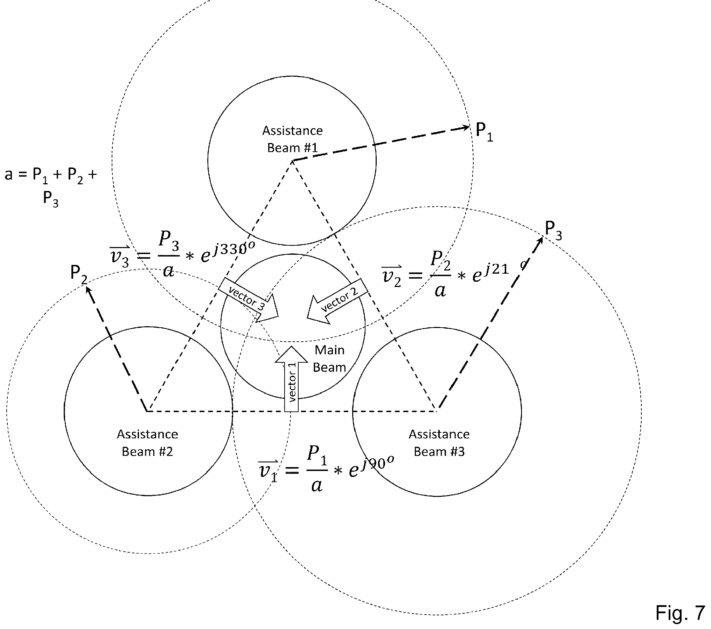

The above calculations to determine $\overrightarrow{v_{res}}$ were all performed in a two-dimensional way (i.e. in a plane). As in reality the two-dimensional Figs. 6, 7, and 8 are actually lying on the surface of a big ball, the calculations could also be done in form of spherical coordinates (i.e. on the surface of the ball) using non-Euclidean geometry principles. However, with sufficient distance from the TRP, the two-dimensional approximation described above seems to be a good solution.

Each of the various received signal strength values (i.e. power levels $P_x$ calculated from the set of RS) could be averaged over time. The various received signal strength values (i.e. power levels $P_x$ calculated from the set of RS) can even be calculated in a sequential order. A constant value of 10 was arbitrarily chosen for the correction factor in this example. In an alternative embodiment different correction factors for each assistance beam may be derived from a non-linear equation taking into account the declining signal power at the edges of each assistance beam (not shown in any of the figures).

The UE may then inform the base station about the calculated offset $\overrightarrow{v_{res}}$, i.e. about the best location of the main beam for the most reliable reception of the directed main lobe signal. As a response to this piece of information the respective TRP may then adjust the downlink transmission orientation accordingly thereby improving the antenna gain for the respective TRP-Tx-beam at the UE's current location. Eventually, transmission power may be reduced at the TRP and energy can be saved.

According to Fig. 9, the norm (i.e. length) and angle of the resulting vector $\overrightarrow{v_{res}}$ are:

$|b|$ = 1.01 and $\varphi_{res}$ = 8.51° The norm (i.e. length) of the resulting vector, as calculated by Equation 2 and corrected by a constant correction factor, is an approximation of the optimum norm. This level of precision is sufficient in cases where the transmit angle offset of the UE's current location towards the main beam is below the transmit angle offset of the assistance beams towards the main beam (i.e. the UE resides "within" the assistance beams). It is up to reasonable system design (i.e. selection of transmit angle offset of the assistance beams and of measurement periodicity, so that the transmit angle offset of the main beam is always smaller than that of the assistance beams), that this requirement is fulfilled in most scenarios.

In one embodiment of the present invention the correction value could be derived experimentally by comparing (under different conditions) the actually transmit angle offset with the calculated transmit angle offset. The ratio of these parameters may be used as the correction factor.

Variations of the above embodiments are possible.

A general idea of the present invention is to only have reference signals (RS) impressed on the additional assistance beams. However, it is also thinkable to convey both reference signals (RS) and data on the additional beams. Consequently, other neighbouring beams may also be configured to serve as additional assistance beams in context of the present invention. In other words: Additional assistance beams may be steerable physical downlink channels only carrying RS, or "full" downlink physical channels carrying both RS and data.

The invention can be enhanced to a multi-TRP deployment as shown in Fig. 2 in context of the directed downlinks BeamA2 and BeamB2 stemming from different, for example non co-located, TRPs, such as TRP A and TRP B: Both of these beams could be beam arrangements according to Figs. 4 or 5 and as such be surrounded in one form or another by the assistance beams.

In one embodiment of the present invention the number of the additional assistance beams as well as their geometrical position towards each other (and the main lobe), i.e. the transmit angle offset, is fixed.

In a further embodiment of the present invention the number of the additional assistance beams as well as their geometrical position towards each other (and the main lobe) is fixed at least over a certain period of time. The beam arrangement pertaining to a particular main beam can be reconfigured. Alternatively, a periodic switch between two or more beam arrangements pertaining to a particular main beam can be configured.

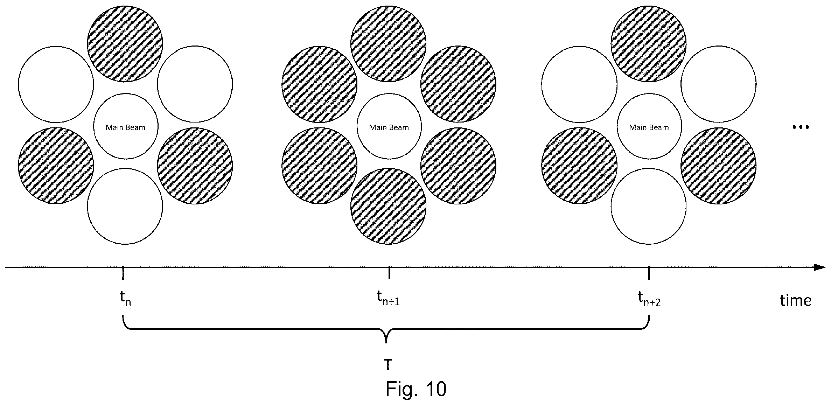

In another embodiment of the present invention the number of the additional assistance beams may vary over time while the geometrical beam pattern (i.e. their positions towards each other and/or to the main lobe) is fixed, e.g., for a relative longer period of time. An example for this is given in Fig. 10.

Varying the number of assistance beams over time is beneficial in situations where the channel conditions are not constant. When channel conditions get worse, the number of assistance beams could be enlarged to improve the accuracy for calculating the correction vector. Likewise, when channel conditions improve, the number of assistance beams can be reduced again to save resources and energy.

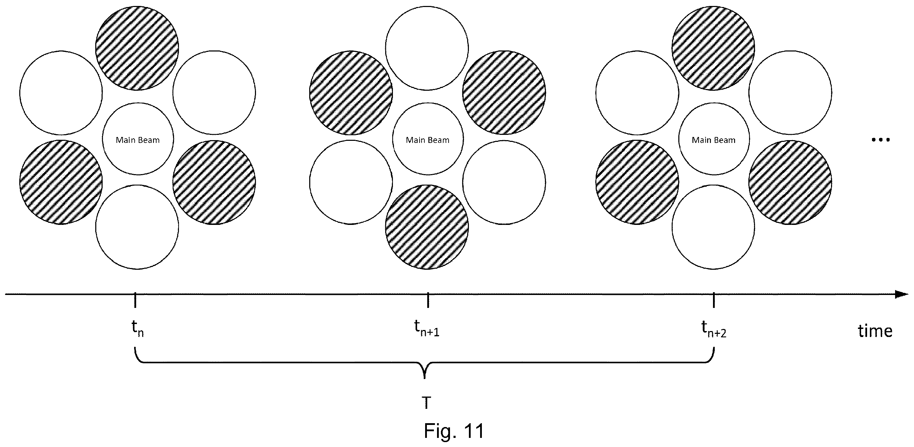

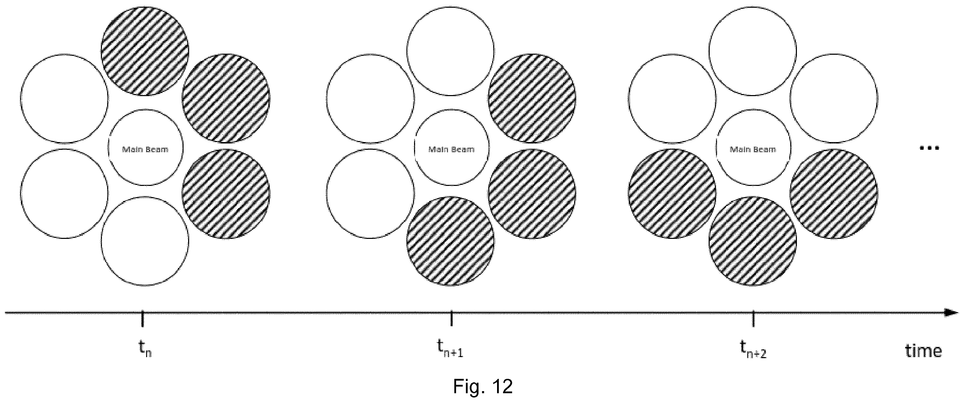

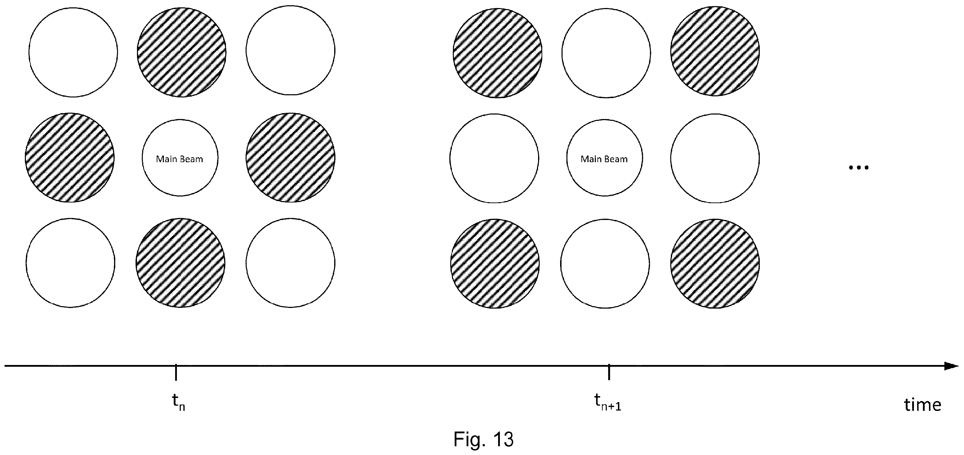

In yet another embodiment of the present invention the geometrical beam pattern (i.e. their positions towards each other and/or to the main lobe) may vary over time while their number is fixed, e.g., for a relative longer period of time. Three examples for this are given in Figs. 11 to 13.

As the channel conditions can be highly variable (even among neighbouring beams), changing the position of the assistance beams (while keeping to the same number) helps to improve accuracy for calculating the correction vector, as extreme values can be filtered out due to averaging effects.

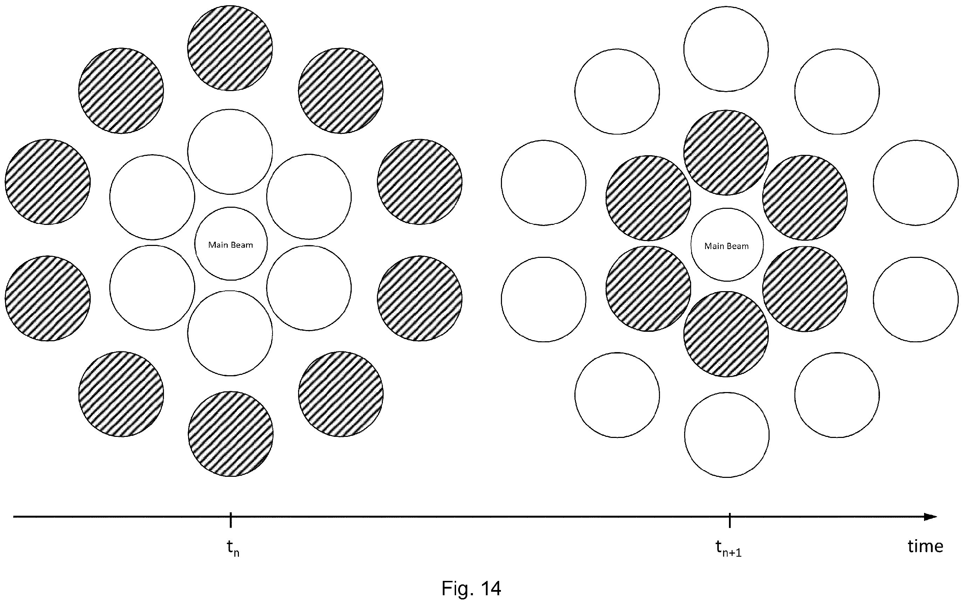

It is also possible that both the geometrical beam pattern and the number of assistance beams vary over time. An example for this is given in Fig. 14. As such, all or a sub-set of the additional assistance beams may be activated and de-activated according to a schedule, e.g. determined by the TRP or another entity of the mobile network based on the channel characteristics and/or UE movement characteristic, or pre-configured. In general, all timing variations may be configurable according to a schedule. Activated assistance beams are depicted with hatching and de-activated assistance beams are depicted in white in Figs. 10 through 14.

The position of assistant beams relative to the main beam may be varied, for example varying the distance of the assistance beams towards the main beam (at the location of the receiver). When the receiver moves fast, said distance can be enlarged to allow the beam system to catch up with the moving receiver (i.e. to improve reliability of assistance beam reception). Likewise, when the receiver moves slowly, said distance can be reduced again to narrow down the spread of the entire beam pattern (i.e. bringing more spatial flexibility to serve other receivers nearby).

The frequency of sending out of the set of assistance beams may also be varied. When the channel conditions are stable, reducing the frequency of the assistance beams helps to save radio resources and energy. In this scenario the main beam may always be present, while the existence of the assistance beams is rather infrequent. When the channel conditions are highly variable, increasing the frequency of the assistance beams would improve the accuracy for calculating the correction vector.

Once a TRP-Tx-beam has been adjusted (i.e. shifted to the spot where the best downlink channel reception characteristic can be expected), at least one property from the following list may change: the number of assistance beams per main beam; the geometrical beam pattern of assistance beams; the schedule for alternating the beam pattern; the parameters to determine average values of $P_x$ over time; the set of reference signals impressed on the various beams; and the main beam's identifier (if present).

Signalling aspects of the invention will now be discussed.

The following deals with signalling options and answers the questions how a UE can be configured to support the novel method and how the UE can report beam tracking feedback to the infrastructure side for the TRP to adjust the main beam.

Beam tracking configuration information may for example comprise an indication what timely cycle and/or what geometrical beam pattern is applied by the corresponding TRP for a given main beam (cf. examples in Figs. 10 through 14). The UE in question could also be informed about in what extent averaging of measurement values is desired by the TRP. Furthermore, the beam tracking configuration information may comprise an indication how often the UE is expected to send beam tracking feedback, or what type of beam tracking feedback (transmit angle offset or offset vector calculated in the UE vs. Px levels measured by the UE on the assistance beams) the TRP expects to receive.

In a HetNet scenario, the configuration information required to support the novel TRP-Tx-beam adjustment method may be transmitted by a macro cell base station (i.e. on the macro cell layer) or by a small cell base station (i.e. on the small cell layer).

Also in a HetNet scenario, the configuration information required to support the TRP-Tx-beam adjustment method may for example be transmitted in its entirety or segregated into parts for dissemination by different base stations. As such, the macro cell layer could use broadcasting means to transmit a common set of beam tracking configuration information, and the small cell layer could use a Directed Downlink to transmit an individual set of beam tracking configuration information (or vice versa).

Beam tracking feedback information may comprise either the transmit angle offset or the offset vector (if the calculations were performed in the UE itself) or a number of Px levels gathered from the various RS impressed on a set of assistance beams (if the UE was only configured to provide measurement values). The amount of data may therefore vary from a few bits to some tens of bits.

With respect to beam tracking feedback information, it is not desirable to send this to an infrastructure node other than the one controlling the TRP sending out the main beam. Regarding the protocol layers, a number of different choices exist: signalling can generally be done at RRC (Radio Resource Control Protocol) layer, via MAC control elements (CEs), or at PHY level. What protocol layer to choose may depend on the actual deployment scenario. For instance, RRC signalling is usually quite reliable, but a little bit slower than using MAC CEs for signalling. In a typical HetNet scenario, the RRC protocol layer may terminate in an infrastructure node other than the TRP and may as such not be suited to carry beam tracking feedback information. Also, in a deployment scenario with front haul connection between a base station and a TRP in form of a RRH, one cannot assume that the TRP supports RRC signalling. Even MAC CEs seem to be not the optimal choice with respect to the termination point of the MAC protocol layer. Consequently, signalling at PHY level seems to be the best choice for signalling of beam tracking feedback information.

In this configuration example we describe how a particular UE can be provisioned via RRC signalling with the information required to support the novel TRP-Tx-beam adjustment method. In order to enable both embodiments (UE is made aware of the geometrical and/or timely pattern of the beam arrangement and performs the calculations for determining either the transmit angle offset or the offset vector itself vs. UE only reports the received power levels $P_x$ gathered from the various assistance beams to the infrastructure side where the calculations are performed) we describe a very general structure for a new RRC beam tracking configuration information element (IE), called BeamTrackingConfig, in the following.

```
BeamTrackingConfig ::=          SEQUENCE {

BeamDetectionDataList ::= SEQUENCE (SIZE (1..maxBeam1)) OF BeamDetectionData

BeamDetectionData ::= SEQUENCE {
    BeamIdentifier              INTEGER (0..63)
    NumberAssistanceBeams       INTEGER (0..15)
    GeoPattern                  ENUMERATED {Triangle, Square, Pentagon, … , Circle, Matrix}
    TypeOfPattern               ENUMERATED {Stable, Alternating, …}
    AlternationMode             ENUMERATED {step-wise, mirroring, jumping, circling, …}
    AlternationPeriod           ENUMERATED {10ms, 20ms, 50ms, 100ms, 200ms, 500ms, …}
    AveragingPeriod             ENUMERATED {1ms, 2ms, 5ms, 10ms, 20ms, 50ms, 100ms, …}
    }

BeamReportingDataList ::= SEQUENCE (SIZE (1..maxBeam2)) OF BeamReportingData

BeamReportingData ::= SEQUENCE {
    MainBeamIdentifier          INTEGER (0..63)
    FeedbackType                ENUMERATED {TransAngleOffset, OffsetVector, PowerLevels}
    CorrectionMethod            ENUMERATED {linear, non-linear}
    CorrectionFactor            INTEGER (0..15)
    CorrectionFormular          ENUMERATED {f1, f2, f3, …}
    ReportingTechnique          ENUMERATED {L1, L2, L3}
    ReportingType               ENUMERATED {periodic, event-triggered}
    ReportingPeriod             ENUMERATED {10ms, 20ms, 50ms, 100ms, 200ms, 500ms, …}
    ReportingTresholdType       ENUMERATED {SignalStrength, AngleOffset, Combined}
    ReportingTreshold1          RSRP-Range
    ReportingTreshold2          ENUMERATED {d0.5, d1.0, d1.5, …}
    }


    }
```

Table 1 provides a description of the various information elements defined above.

Table 1

| Information Element | Description | Presence |
|---|---|---|
| BeamDetectionData | A container defined for a particular main beam. Up to *maxBeam1* containers of this type may be present in one instance of *Beam Tracking Configuration* IE. | Mandatory |
| MainBeamIdentifier | Unique identifier of the main beam in question. | Mandatory |
| NumberAsistanceBeams | Specifying the number of the assistance beams surrounding the main beam identified above. | Mandatory |
| GeoPattern | Specifying the type of the geometrical beam pattern. | Mandatory |

(continued)

| Information Element | Description | Presence |
|---|---|---|
| TypeOfPattern | Indicating whether the pattern remains the same or is alternating (e.g., according to one of the Figs 10-14). | Optional |
| AlternationMode | Specifying details on how the assistance beams change. | Optional |
| AlternationPeriod | Specifying how frequently the pattern changes. | Optional |
| AveragingPeriod | Can be used to configure an averaging window for the UE to perform measurements in. | Optional |
| BeamReportingData | A container defined for configuring the reporting with respect to a particular main beam. Up to *maxBeam2* containers of this type may be present in one instance of *Beam Tracking Configuration* IE. | Mandatory |
| BeamIdentifier | Unique identifier of the main beam. | Mandatory |
| FeedbackType | Specifying the type of feedback that is requested form the TRP. It could be one of the following: calculated Transmit Angle Offset, calculated Offset Vector, or measured power level values $P_x$ (e.g., per assistance beam). | Mandatory |
| CorrectionMethod | Specifying the nature of the correction method for calculating the Transmit Angle Offset or Offset Vector. | Optional |
| Correction Factor | Indicating the value of the linear correction factor to be used. | Optional |
| CorrectionFormula | Specifying the correction formula to be used. Here, it is assumed that different formulas are known by the UE(s) so that only a reference to the selected formula | Optional |
|  | needs to be transmitted. |  |
| ReportingTechnique | Indicating the protocol layer to be used for reporting, for example: L1 = physical layer, L2 = MAC Control Element, L3 = RRC signalling). | Optional |
| ReportingType | Specifying whether periodic or event-triggered reporting is to be used by the UE. | Optional |
| ReportingPeriod | Specifying the reporting periodic (in case of periodic reporting). | Optional |
| ReportingThresholdType | Enabling different reporting thresholds for event-triggered reporting that may even be combined: <br> - based on signal strength, or <br> - based on angle offset, or <br> - based on both of the above. | Optional |
| ReportingThreshold 1 | Indicating an absolute or relative signal strength threshold of the assistance beams as a first threshold (in case of event-triggered reporting): The IE RSRP-Range is used according to TS 36.331 (definition) and TS 36.133 (mapping table). | Optional |
| ReportingThreshold2 | Indicating an angle offset as a second threshold (in case of event-triggered reporting): d0.5 corresponds to 0.5 degree and so on. | Optional |

The pieces of information to be included in the new BeamTrackingConfig IE, highlighted in the table above in grey, could, for example, be added to one of the following new information elements (IEs):

radioResourceConfigCommon Beam
For inclusion in a system information broadcast.

radioResourceConfigDedicatedBeam
For inclusion in dedicated RRC signalling.

AssistanceBeamsToAddModList

For inclusion in dedicated RRC signalling.

which in turn may be used in various new or already existing RRC messages.

The following is an example of feedback at the physical, PHY, layer.

In this reporting example we describe how a particular UE can give beam tracking feedback to a TRP to support the novel TRP-Tx-Beam adjustment method by means of physical layer signalling.

The content which may be sent back in an uplink direction may depend on the embodiment as follows:

First embodiment: The resulting steering vector (or the actual transmit angle offset) is calculated in the UE, transmitted to the infrastructure side and then applied by the respective TRP on the transmitting side.

Second embodiment: The UE reports the different power levels $P_x$ measured on the various assistance beams and the TRP calculates the parameters for an optimal TRP-Tx-beam adjustment.

Regardless of the different content (or, embodiments), the signalling may use a new form of uplink control information (UCI).

In current 4G communication systems, like LTE, UCI may be carried over PUCCH (mostly when the UE has no data to send in a given sub frame) or PUSCH (mostly when the UE anyway has uplink data to send in a given sub frame) uplink channels and doesn't require any protocol stack processing. UCI signals are directly impressed on the physical layer (i.e. UCI signals are written and read in the physical layer). From 3GPP LTE Rel-10 on simultaneous transmission of PUCCH and PUSCH is allowed for a given UE.

Furthermore, in current 4G communication systems, like LTE, UCI basically carries information about the downlink channels' quality that a base station requires from a UE in order to understand what signal adaptations the UE needs. UCI may be divided into three categories: channel state information (CSI), scheduling requests (SR) and HARQ ACK/NACKs. A UE transmits a certain combination of these three pieces of information depending on situation; sometimes it carries only SR, sometimes SR and HARQ ACK/NACK together, etc. A number of different UCI Formats has been defined in 3GPP TS 36.211, for example enabling uplink data transmissions of 48 bits per sub frame (cf. PUCCH format 3 with QPSK modulation in Table 2 below).

The beam tracking feedback information may be included into the CSI portion of the existing UCI signalling, or another distinct PUCCH format may be defined for it. As the number of bits for beam tracking feedback information can be expected (in some embodiments) to be higher than for CSI, the new UCI format we propose may span over (or, couple) several uplink resource blocks (RBs) in different sub frames on the PUCCH and/or apply a higher order modulation technique.

Today's PUCCH supports several different formats already depending on information to be signalled: UCI having a different number of bits for each sub frame can be transmitted according to a modulation scheme. For example, when using a binary phase shift keying (BPSK) (i.e., a PUCCH format 1a), 1-bit UL control information can be transmitted per Symbol assigned to the PUCCH, and when using quadrature phase shift keying (QPSK) (i.e., a PUCCH format 1b), 2-bit UL control information can be transmitted per symbol assigned to the PUCCH.

Table 2 shows the already existing PUCCH Formats 1 through 5 as defined in 3GPP TS 36.211 plus two exemplary new PUCCH Formats:

PUCCH Format 6a: This carries a new UCI element "BFF-AO" (Beamforming Feedback - Angle Offset) which can be used to indicate the Beam Tracking Feedback Information in form of the angle offset determined by the UE. We propose to allow 8 bits for this element (two times 4 bits), which would allow to span a 16 x 16 matrix (in Cartesian coordinates). Another granularity (for example 6 bits allowing a 9 x 9 matrix, or 10 bits allowing a 25 x 25 matrix, and so on) would also be possible.

PUCCH Format 6b: This carries a new UCI element "BFF-Px" (Beamforming Feedback - Power Levels) which can be used to indicate the beam tracking feedback information in form of (at least one) power level(s) measured on the assistance beams by the UE. We propose to allow 4 bits per assistance beam for this element. In case of our preferred embodiment with a geometrical pattern consisting of three assistance beams arranged in form of a triangle this would sum up to 12 bits in total. Alternatively, 7 bits per assistance beam could be used in accordance with the RSRP-Range defined TS 36.331 and the corresponding power levels listed in TS 36.133 (mapping table). This would sum up to 36 bits in total.

In another embodiment of the present invention the UCI elements "BFF-AO" and/or "BFF-Px" can be combined with any of the existing PUCCH Formats 1 through 5 in order to create other new PUCCH Formats to support the present invention.

Table 2

| PUCCH Format | | Number of bits per UCI Element | | | | |
|---|---|---|---|---|---|---|
| | | ACK/NACK | SR | CSI | BFF-AO | BFF-Px |
| 1 | | | | 1 | | |
| 1a | | 1 | | | | |
| 1b | FDD (1CC) | 2 | | | | |
| | FDD (2CC) | 4 | | | | |
| | TDD (1CC) | 4 | | | | |
| 2 | | | | 20 | | |
| 2a | | 1 | | 20 | | |
| 2b | | 2 | | 20 | | |
| 3 | FDD(up to 5CC) | 10 | | | | |
| | TDD(up to 5CC) | 20 | | | | |
| | FDD(up to 5CC) | 10 | 1 | | | |
| | TDD(up to 5CC) | 20 | 1 | | | |
| 4 | | | | | | |
| 5 | | | | | | |
| 6a | | | | | 8 | |
| 6b | | | | | | 4 per assistance beam |

The names and encoding variants of the new information elements (IE) discussed in the present document shall be understood to merely serve as examples. There are many other options to encode and transfer the information. This invention is by no means restricted to the encoding examples we disclose here.

Furthermore, the parameters we propose to be used may be assorted in one way or another, for example they may be collated in a new or already existing hierarchical structure, or grouped together with other information elements (IE) for instance in form of a list.

The new information elements (IE) according to the present invention can be included in various new or already existing RRC messages.

The focus of the present invention lies primarily on directed downlink transmissions, where multiple assistance beams are transmitted by a TRP associated with a base station in a downlink direction to a mobile device in order to optimize the transmission orientation (or, the direction) of a proximate main beam, and the mobile device is enabled to report the corresponding beam forming feedback in an uplink direction back to the TRP. However, the principles of using a plurality of assistance beams in the ways outlined in the present invention are not restricted to such a downlink arrangement. Instead, the principles may be generalized to any kind of beam communication between a transmitter and a receiver, including directed uplink transmissions and directed side link transmissions (e.g., in the scope of device-to-device or vehicle-to-vehicle communication).

**Claims**

1. A method of determining, at a receiver, information for optimizing a transmission direction of a radio beam towards the receiver, the method comprising:

   receiving a plurality of information carrying assistance radio beams, the plurality of assistance beams being arranged in a geometrical pattern relative to a main beam;
   measuring for each received assistance radio beam a received power level; and
   using the geometrical pattern and the received power levels to generate a transmit direction offset for the main radio beam to direct the main radio beam to the receiver relative to an initial position determined by the geometrical pattern,

**characterized in that** the geometrical pattern varies with time in a predetermined manner.

2. A method of transmitting a radio beam towards a receiver, the method comprising:

transmitting from a transmitter a plurality of information carrying assistance radio beams, the plurality of assistance beams being arranged in a geometrical pattern relative to a main beam; and
receiving information for performing a transmit direction offset determination for the main beam to direct the main beam to the receiver relative to an initial position determined by the geometrical pattern,

**characterized in that** the geometrical pattern varies with time in a predetermined manner.

3. The method according to any preceding claim, wherein the assistance beams form the geometrical pattern around the initial position of the main beam.

4. The method according to any preceding claim, wherein the geometrical pattern comprises a plurality of concentric rings, the main beam initial position being at a centre of the rings.

5. The method according to any preceding claim, wherein the plurality of assistance beams varies in number with time.

6. The method according to claim 1 or any claim depending from claim 1, wherein the receiver transmits to a transmission and reception point which transmits the assistance and main beams a transmission offset angle.

7. The method according to any one of claim 1 or any one of claims 3 to 5 depending from claim 1, wherein the receiver transmits to a transmission and reception point which transmits the assistance and main beams the measured power levels of the assistance beams for the transmission and reception point to generate the transmit direction offset.

8. The method according to claim 2 or any claim depending from claim 2, wherein the transmission and reception point receives from a receiver of the assistance beams a transmission offset angle.

9. The method according to claim 2 or any one of claims 3 to 5 depending from claim 2, wherein the transmission and reception point which transmits the assistance and main beams receives from a receiver of the assistance beams measurements of power levels of the assistance beams and generates therefrom the transmit direction offset.

10. The method according to claim 2 or any one of claims 3 to 5 depending from claim 2 or one of claims 8 and 9, wherein the transmitter is a transmission and reception point of a mobile communications system.

11. The method according to claim 1, wherein an angular offset of the assistance beams to the main beam varies with time.

12. The method according to claim 1, wherein the assistance beams are transmitted periodically at a variable frequency such that a time interval between transmissions is varied.

Fig. 1

Fig. 3

Fig. 2

Fig. 4

Fig. 5

Fig. 6

EP 3 404 845 A1

Fig. 7

Fig. 8

P₃

P₁

Assistance
Beam #1

Assistance
Beam #3

Main
Beam

$\varphi_{res}$

$\overline{v_{res}} = |b| * e^{j\varphi_{res}}$

Assistance
Beam #2

P₂

| P | 23,3 | polar coordinates | | cartesian coordinates | |
|---|---|---|---|---|---|
| | | Distance | Angle | x-value | y-value |
| P1 | 8 | 3,43 | 90,00 | 0,00 | 3,43 |
| P2 | 6,3 | 2,70 | 210,00 | -2,34 | -1,35 |
| P3 | 9 | 3,86 | 330,00 | 3,35 | -1,93 |
| Resulting Vector: | | 1,01 | 8,51 | 1,00 | 0,15 |
| | | | | 0,00 | 0,00 |
| correction factor: | | 10 | | | |

Fig. 9

Fig. 10

Fig. 11

Fig. 12

Fig. 13

Fig. 14

Europäisches
Patentamt

European
Patent Office

Office européen
des brevets

# EUROPEAN SEARCH REPORT

Application Number

EP 18 17 2939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/014429 A1 (GUO YINGJIE JAY [GB]) 22 January 2004 (2004-01-22) * paragraph [0093] - paragraph [0098]; figure 5 * * paragraphs [0020], [0024], [0040], [0110], [0117], [0130] - [0132] * * paragraph [0103]; figure 5 * * paragraph [0108]; figure 6 * ----- | 1-12 | INV. H04B7/06 H04W16/28 |
| X | US 2016/191131 A1 (BALRAJ RAJARAJAN [BY] ET AL) 30 June 2016 (2016-06-30) * paragraph [0048]; figure 4 * * paragraphs [0011], [0040], [0046] * * paragraph [0042]; figure 3 * * paragraph [0016]; figure 1 * ----- | 1,2,6-10 | |

TECHNICAL FIELDS
SEARCHED (IPC)

H04B
H04W

The present search report has been drawn up for all claims

| Place of search | Date of completion of the search | Examiner |
|---|---|---|
| Munich | 12 September 2018 | Ganis, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 2939

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2018

| Patent document cited in search report | | Publication date | Patent family member(s) | | Publication date |
|---|---|---|---|---|---|
| US 2004014429 | A1 | 22-01-2004 | EP | 1310051 A1 | 14-05-2003 |
| | | | JP | 4344133 B2 | 14-10-2009 |
| | | | JP | 2004507151 A | 04-03-2004 |
| | | | US | 2004014429 A1 | 22-01-2004 |
| | | | WO | 0215432 A1 | 21-02-2002 |
| US 2016191131 | A1 | 30-06-2016 | CN | 105706376 A | 22-06-2016 |
| | | | EP | 3084982 A1 | 26-10-2016 |
| | | | US | 2016191131 A1 | 30-06-2016 |
| | | | WO | 2015094155 A1 | 25-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HYOUNGJU JI et al.** Overview of FD-MIMO in LTE-Advanced Pro. *IEEE Communications Magazine,* February 2017, vol. 55 (2